# EUROPEAN PATENT SPECIFICATION

(11) **EP 2 751 450 B1**
(45) Date of publication and mention of the grant of the patent: **07.10.2015**
(21) Application number: 12754188.6
(22) Date of filing: 28.08.2012
(51) Int. Cl.: F16J 15/00, F16J 15/16, F16J 15/32, F16J 15/48

(54) **HYDRAULIC SEAL ASSEMBLY FOR A THERMOPLASTIC MATERIAL DISPENSING VALVE ASSEMBLY**
HYDRAULISCHE DICHTUNGSANORDNUNG FÜR EINE VENTILANORDNUNG ZUR AUSGABE EINES WÄRMEHÄRTENDEN MATERIALS
ENSEMBLE JOINT HYDRAULIQUE POUR SOUPAPE DISTRIBUANT UN MATÉRIAU THERMOPLASTIQUE

(30) Priority: 31.08.2011 US 201161573089 P; 27.06.2012 US 201213534018
(43) Date of publication of application: 09.07.2014
(73) Proprietor: Illinois Tool Works Inc., Glenview, IL 60025 (US)
(72) Inventor: MCGUFFEY, Grant, Glenview, Illinois 60026 (US)
(74) Representative: Trinks, Ole
(86) International application number: PCT/US2012/052594
(87) International publication number: WO 2013/033053

(56) References cited:
- WO-A2-02/079676
- US-A1- 2012 126 492

## Description

### CROSS REFERENCE TO RELATED PATENT APPLICATION

This patent application is related to, based upon, and effectively a utility/non-provisional patent application conversion from United States Provisional Patent Application Serial Number 61/573,089, which was filed on August 31, 2011, the filing date benefits of which are hereby claimed.

### FIELD OF THE INVENTION

The present invention relates generally to seal mechanisms, and more particularly to a hydraulic seal assembly for use within a hot melt adhesive or other thermoplastic material dispensing valve assembly.

### BACKGROUND OF THE INVENTION

In conventional liquid dispensing systems, such as, for example, those systems outputting or discharging hot melt adhesives or other thermoplastic materials, a dispensing valve assembly, comprising a reciprocally moving valve stem having a valve member fixedly disposed thereon and operatively associated with a valve seat, is usually employed so as to in fact permit the dispensing of the hot melt adhesive or other thermoplastic material when the valve member is disposed at its **UNSEATED** or **OPENED** position with respect to the valve seat, or to prevent the dispensing of the hot melt adhesive or other thermoplastic material when the valve member is disposed at its **SEATED** or **CLOSED** position with respect to the valve seat. In addition, conventional dispensing valve assemblies also comprise a seal cartridge which includes a seal mechanism for preventing the leakage of the hot melt adhesive or other thermoplastic material out from the dispensing valve assembly. The seal cartridge is provided with a weep hole from which the hot melt adhesive or other thermoplastic material can effectively escape indicating to the operator that the seal mechanism has undergone failure and that the valve assembly needs to be replaced. Since a pressure differential is effectively defined across the seal mechanism barrier, due to the fact that one side of the seal mechanism is exposed to the pressure comprising the hot melt adhesive or other thermoplastic material while the other side of the seal mechanism is effectively at atmospheric pressure, this constant pressure differential always tends to push or force the hot melt adhesive or other thermoplastic material past the seal mechanism. However, as long as the structural integrity of the seal mechanism is maintained intact, there will effectively be no leakage of the hot melt adhesive or other thermoplastic material out from the seal cartridge and the dispensing valve assembly. To the contrary, when the structural integrity of the seal mechanism is in fact eventually compromised and effectively fails, leakage of the hot melt adhesive or other thermoplastic material out from the seal cartridge and the dispensing valve assembly will occur.

The operative service life of a hot melt adhesive or other thermoplastic material valve dispensing assembly is conventionally measured in cycles. Conventional valve dispensing assemblies employing conventional seal mechanisms can normally have an operative service life of approximately 250,000,000 cycles. During each cycle, the valve stem is moved in a reciprocal manner past the seal mechanism. As the valve stem moves past the seal mechanism in accordance with its reciprocal cyclic movements, the hot melt adhesive or other thermoplastic material tends to cling or adhere to the valve stem and therefore the hot melt adhesive or other thermoplastic material also moves past the seal mechanism in a reciprocal manner. As a result, that portion of the hot melt adhesive or other thermoplastic material which bypasses the seal mechanism, and effectively enters the interior portion of the seal cartridge, is exposed to the air or oxygen contained within the seal cartridge since the seal cartridge is fluidically connected to the ambient atmosphere as a result of the provision of the aforenoted weep hole. Accordingly, such portion of the hot melt adhesive or other thermoplastic material effectively becomes a hardened and abrasive mass. As can therefore be appreciated, each time this hardened and abrasive mass reciprocates past the seal mechanism during the aforenoted cyclic operations, the hardened and abrasive mass will begin to erode the seal mechanism eventually leading to its failure. When failure of the seal mechanism does in fact occur, substantial leakage of the hot melt adhesive or other thermoplastic material past the seal mechanism will also occur whereby the leaked hot melt adhesive or other thermoplastic material will eventually leak out from the weep hole defined within the seal cartridge thereby indicating to the operator that the seal mechanism has in fact failed and that the valve dispensing assembly needs to be replaced.

A need therefore exists in the art for a new and improved seal assembly for use within a hot melt adhesive or other thermoplastic material dispensing valve assembly, whereby the effective service life of the seal assembly, as well as that of the hot melt adhesive or other thermoplastic material dispensing assembly, will be substantially increased.

Document WO 02/079676 A2 shows a seal with the features of the preamble of claim 1.

### SUMMARY OF THE INVENTION

The foregoing and other objectives are achieved in accordance with the teachings and principles of the present invention through the provision of a new and improved seal assembly for use within a hot melt adhesive or other thermoplastic material dispensing valve assembly, wherein the new and improved seal assembly comprises a sealing cartridge or casing comprising a first or primary seal member, a secondary seal member, and a viscous incompressible silicone grease or similar fluid disposed internally within the sealing cartridge or casing. The viscous silicone grease or similar fluid effectively distributes the pressure forces such that internal pressure forces within the silicone grease or similar fluid are substantially equal to the external pressure forces of the hot melt adhesive or other thermoplastic material whereby a pressure differential across the primary seal member is effectively eliminated thereby effectively eliminating the tendency or propensity for leakage of the hot melt adhesive or other thermoplastic materials. In addition, the viscous silicone grease or similar fluid acts as a lubricant thereby reducing friction and wear of the primary and secondary seal members whereby the cyclic operation and service life of the hot melt adhesive valve dispensing assembly can be substantially increased, such as, for example, by a factor of two or three, such that the operative cycles can be approximately within the range of 500,000,000-750,000,000.

### BRIEF DESCRIPTION OF THE DRAWINGS

Various other features and attendant advantages of the present invention will be more fully appreciated from the following detailed description when considered in connection with the accompanying drawings in which like reference characters designate like or corresponding parts throughout the several views, and wherein:
**FIGURE 1A** is a left side elevational view of a new and improved hot melt adhesive or other thermoplastic material dispensing valve assembly incorporating the new and improved seal assembly of the present invention therewithin;
**FIGURE 1B** is a front elevational view of the new and improved hot melt adhesive or other thermoplastic material dispensing valve assembly as shown in **FIGURE 1A****;**
**FIGURE 2** is an enlarged cross-sectional view of the new and improved hot melt adhesive or other thermoplastic material dispensing valve assembly as shown in **FIGURE 1A** as taken along the lines **2-2** of **FIGURE 1A****;** and
**FIGURE 3** is an enlarged view of the new and improved seal assembly as disclosed within **FIGURE 2** so as to clearly show the details of the new and improved seal assembly.

### DETAILED DESCRIPTION OF THE PREFERRED EMBODIMENT

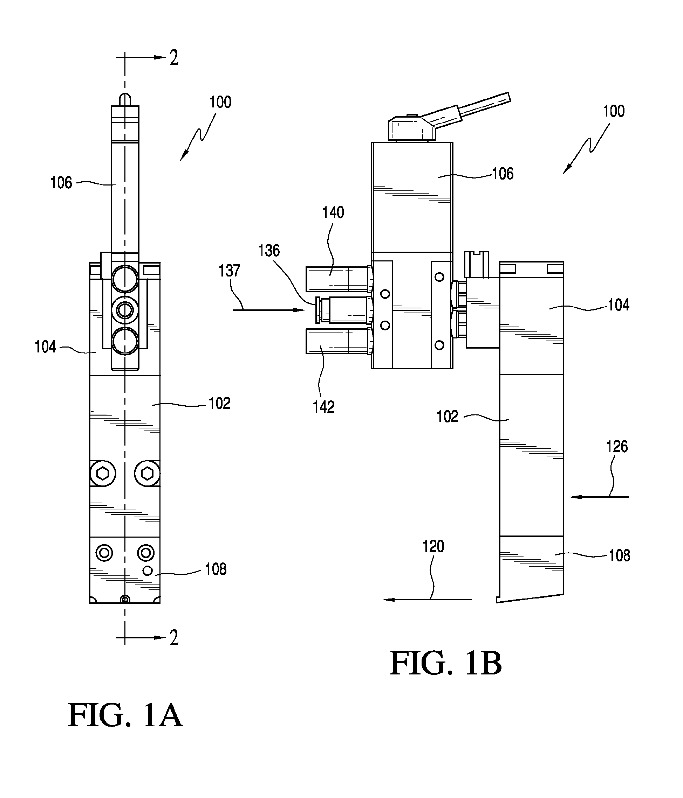

Referring now to the drawings, and more particularly to **FIGURES 1A** and **1B** thereof, a new and improved hot melt adhesive or other thermoplastic material dispensing valve assembly, incorporating a new and improved seal assembly of the present invention therewithin, and constructed in accordance with the principles and teachings of the present invention, is disclosed and is generally indicated by the reference character 100. More particularly, the new and improved dispensing valve assembly 100 of the present invention can be used to dispense hot melt adhesives or other thermoplastic materials onto an underlying substrate or product as the substrate or product passes beneath the dispensing valve assembly 100 along a product processing line during a hot melt adhesive or other thermoplastic material application or dispensing operation or cycle. The dispensing valve assembly 100 is seen to comprise a valve body section or housing 102 containing a dispensing valve as will be more fully disclosed hereinafter, a dispensing valve actuator assembly 104 for controlling the movement of the dispensing valve in a vertically reciprocal manner as will also be disclosed more fully hereinafter, an electro-pneumatic solenoid assembly 106 that controls the disposition of control air to the dispensing valve actuator assembly 104 so as to control the reciprocal movement of the dispensing valve as will be more fully disclosed hereinafter, and an output manifold assembly 108 which provides for the output or dispensing of the hot melt adhesive or other thermoplastic material.

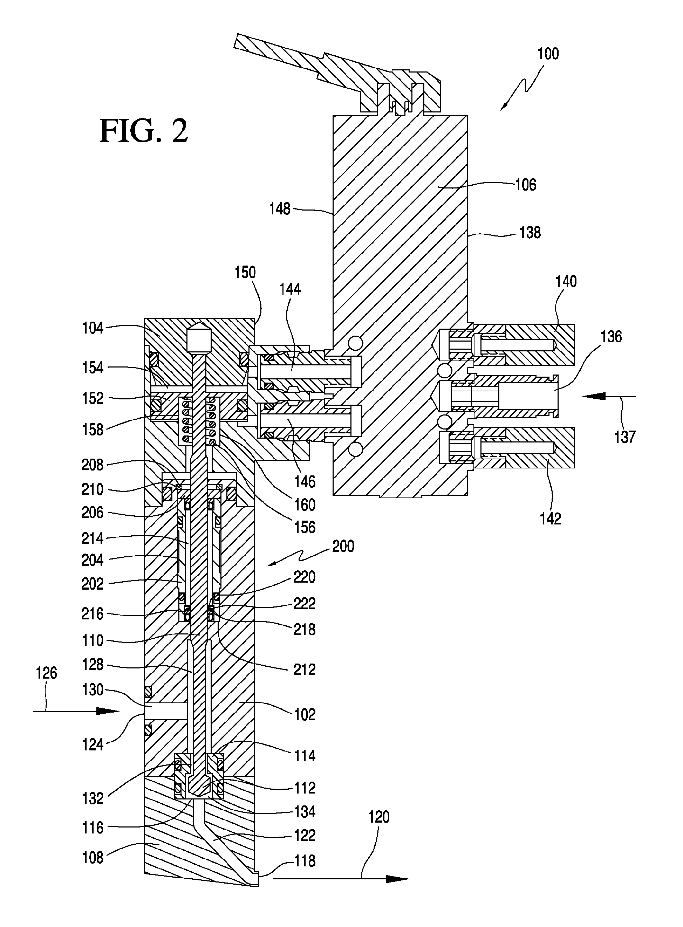

With reference now being made to **FIGURE 2****,** it is seen that the valve body section or housing 102 has a vertically reciprocal valve stem 110 disposed therein. A valve member 112 is fixedly secured to the lower end portion of the valve stem 110 and it is also seen that a valve seat 114 is effectively disposed at the interface defined between the lower end portion of the valve body section or housing 102 and the upper end portion of the output manifold assembly 108. The output manifold assembly 108 is seen to further comprise a hot melt adhesive or other thermoplastic material output port 116, a hot melt adhesive or other thermoplastic material dispensing port 118, from which hot melt adhesive or other thermoplastic material can be dispensed as illustrated at 120, and a hot melt adhesive or other thermoplastic material output passage 122 defined within the output manifold assembly 108 and fluidically connecting the hot melt adhesive or other thermoplastic material output port 116 to the hot melt adhesive or other thermoplastic material dispensing port 118. Furthermore, a hot melt adhesive or other thermoplastic material inlet supply port 124 is also provided within the valve body section or housing 102 so as to introduce hot melt adhesive or other thermoplastic material into the dispensing valve assembly 100 as at 126, and still yet further, the valve body section or housing 102 is also provided with a vertically oriented fluid passageway 128 which annularly surrounds the valve stem 110 and is fluidically connected to the hot melt adhesive or other thermoplastic material inlet supply port 124 by means of a horizontally oriented fluid conduit or passageway 130 also defined within the valve body section or housing 102.

Accordingly, it can be appreciated that when the valve stem 110 is moved toward its lowered position, as illustrated within **FIGURE 2****,** the valve member 112 will be disposed at its **UNSEATED** or **OPENED** position with respect to the valve seat 114 whereby the hot melt adhesive or other thermoplastic material can flow from the hot melt adhesive or other thermoplastic material inlet supply port 124, through the horizontally oriented fluid conduit or passageway 130, into the vertically oriented fluid passageway 128 annularly surrounding the valve stem 110, into a vertically oriented passageway 132 defined within the valve seat 114 and annularly surround the valve stem 110, around the valve member 112, since it is **UNSEATED** or **OPENED** with respect to the valve seat 114, into a chamber 134 defined within the lower portion of the valve seat 114, and out through the hot melt adhesive or other thermoplastic material output port 116, the hot melt adhesive or other thermoplastic material output passage 122, and the hot melt adhesive or other thermoplastic material dispensing port 118. To the contrary, when the valve stem 110 is disposed at its upper or elevated position, the valve member 112 will be disposed at its **SEATED** or **CLOSED** position with respect to the valve seat 114 whereby fluid flow of the hot melt adhesive or other thermoplastic material is terminated.

With reference still being made to **FIGURE 2****,** it is seen that in order to control the vertical disposition of the valve stem 110 and the valve member 112, the electro-pneumatic solenoid assembly 106 has a control air input fitting 136 fixedly secured within one side wall portion 138 of the electro-pneumatic solenoid assembly 106 so as to permit control air 137 to enter the electro-pneumatic solenoid assembly 106, as well as a pair of control air output fittings 140,142 also fixedly secured within the side wall portion 138 of the electro-pneumatic solenoid assembly 106. In a corresponding manner, a pair of control air input/output fittings 144,146 have first end portions thereof fixedly disposed within an opposite side wall portion 148 of the electro-pneumatic solenoid assembly 106, while second end portions of the control air input/output fittings 144,146 are fixedly disposed within a side wall portion 150 of the dispensing valve actuator assembly 104. It is further seen that a piston 152 is fixedly attached to an upper portion of the valve stem 110, and that the piston 152 is movable in a vertically reciprocal manner within a piston chamber 154 defined within a substantially central region of the dispensing valve actuator assembly 104. A coil spring 156 is also annularly disposed around an upper portion of the valve stem 110 wherein opposite ends of the coil spring 156 are disposed within counterbored regions 158, 160 respectively defined within an undersurface portion of the piston 152 and a central region of the dispensing valve actuator assembly 104.

It is to be further appreciated that the electro-pneumatic solenoid assembly 106 is also provided with fluid passageways, not shown, which fluidically interconnect the pair of control air output fittings 140,142 with the pair of control air input/output fittings 144,146, and in a similar manner, the dispensing valve actuator assembly 104 is likewise provided with fluid passageways, also not shown, which fluidically interconnect the pair of control air input/output fittings 144,146 to regions of the piston chamber 154 above and below the piston 152. Accordingly, it can therefore be appreciated that when control air 137 is conducted, for example, into the control air input fitting 136 of the electro-pneumatic solenoid assembly 106, and when the electro-pneumatic solenoid assembly 106 has been operated in a first mode, the control air 137 will be fluidically conducted from the control air input fitting 136, into the first control air input/output fitting 144 and into the upper portion of the piston chamber 154, that is, into that region of the piston chamber 154 disposed above the piston 152, so as to force the piston 152, the valve stem 110, and the valve member 112 to move downwardly toward the valve member's **UNSEATED** or **OPENED** position. At the same time, the air within the lower portion of the piston chamber 154, that is, the air beneath the piston 152, is forced outwardly and exhausted to atmosphere through the second control air input/output fitting 146 and the first one of the control air output fittings 140. Conversely, when the electro-pneumatic solenoid assembly 106 has been operated in a second mode, the control air 137 will be fluidically conducted from the control air input fitting 136, into the second control air input/output fitting 146 and into the lower portion of the piston chamber 154, that is, into that region of the piston chamber 154 disposed beneath the piston 152, so as to force the piston 152, the valve stem 110, and the valve member 112 to move upwardly toward the valve member's **SEATED** or **CLOSED** position. At the same time, the air within the upper portion of the piston chamber 154, that is, the air above the piston 152, is exhausted outwardly through the first control air input/output fitting 144 and the second one of the control air output fittings 142. It is to be lastly noted that while the piston 152 is normally spring-biased toward its upper position at which the valve member 112 will be disposed at its **SEATED** or **CLOSED** position with respect to valve seat 114, the provision of the control air, to move the piston 152 to its upper position, effectively supplements the bias of the coil spring 156 and serves to rapidly move the piston 152 and the valve stem 110, and therefore the valve member 112, to its **SEATED** or **CLOSED** position.

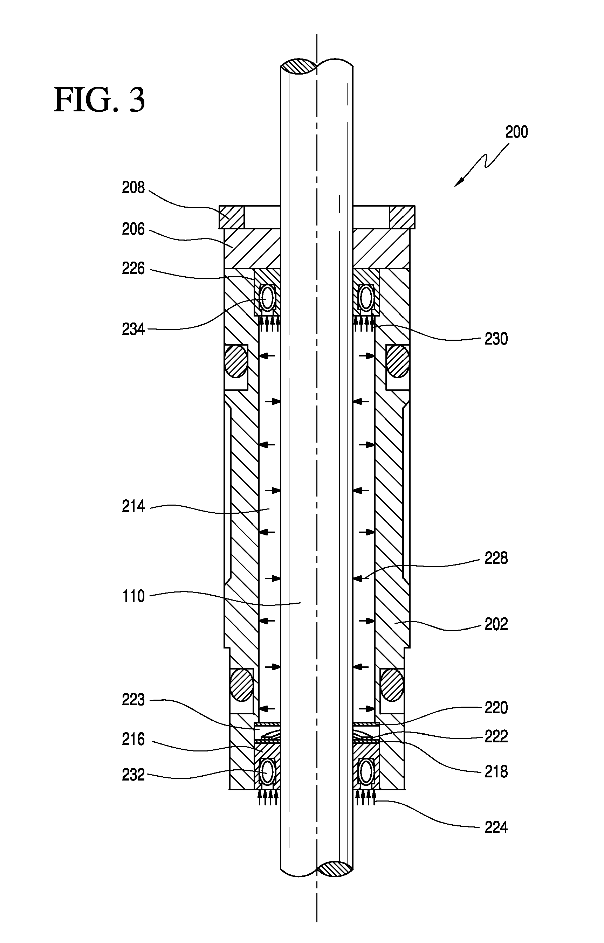

Continuing further, and with additional reference being made to **FIGURE 3**, in conjunction with **FIGURE 2**, the new and improved sealing assembly of the present invention, generally indicated by the reference character 200, will now be described. The sealing assembly 200 is seen to comprise a seal cartridge or casing 202 which is adapted to be fixedly disposed within a chamber 204 which is defined within an upper axial portion of the valve body section or housing 102. The uppermost portion of the seal cartridge or casing 202 is provided with a containment washer 206 and a retaining ring 208, and it is to be appreciated from **FIGURES 2** and **3** that the retaining ring 208 is diametrically larger than the diametrical extent of the seal cartridge or casing 202 so as to extend radially outwardly therefrom. An annularly counterbored region 210 is defined within the upper end portion of the valve body section or housing 102, and is adapted to accommodate the retaining ring 208 of the seal cartridge or casing 202, as can best be seen in **FIGURE 2**, such that the seal cartridge or casing 202 is in fact fixedly secured within the valve body section or housing 102. The lower end portion of the seal cartridge or casing 202 is also noted as being seated upon an annular shoulder portion 212 which also effectively defines the floor region of the chamber 204. As is conventional, the seal cartridge or casing 202 annularly surrounds the valve stem 110 so as to define an annular space or chamber 214, however, unlike conventional seal cartridges or casings, the seal cartridge or casing 202 is not empty and does not have a weep hole. To the contrary, the annular space or chamber 214 of the seal cartridge or casing 202 is filled with a high temperature viscous silicone grease or similar fluid.

In addition, the sealing assembly 200 of the present invention comprises sealing members which operate in conjunction with the aforenoted silicone grease or similar fluid in order to effectively prevent the hot melt adhesive or other thermoplastic material from passing through the sealing assembly 200 and into the piston chamber 154 of the dispensing valve actuator assembly 104 and thereby fouling the operation of the piston 152. More particularly, the sealing assembly 200 comprises a first or primary seal member 216 which annularly surrounds a central portion of the valve stem 110 and is mounted in a vertically reciprocal manner within the lower end portion of the sealing cartridge or casing 202. First and second washers 218,220 are operatively associated with the first primary seal member 216, and a preloading or compression spring 222 is interposed between the first and second washers 218,220 as a result of being disposed within a chamber 223 defined between the first and second washers 218,220. As can best be appreciate from **FIGURE 3**, with reference also being made to **FIGURE 2** for overall environmental or spatial context, as the hot melt adhesive or other thermoplastic material enters the hot melt adhesive or other thermoplastic material dispensing valve assembly as at 126 and through means of inlet supply port 124, the operating pressure, characteristic of the incoming pressurized hot melt adhesive or other thermoplastic material, will be exerted upon the undersurface portion of the first primary seal member 216 as indicated by reference arrows 224.

Accordingly, since the chamber 223 also contains, and is fluidically connected to, the viscous silicone grease or similar fluid disposed within the annular space or chamber 214, the upwardly oriented pressure forces 224 will cause the first primary seal member 216 to move upwardly, such movement compresses the preloading or compression spring 222, and the pressure forces are further transmitted to the viscous silicone grease or similar fluid disposed within the annular space or chamber 214. The upper portion of the sealing cartridge or casing 202 is also provided with a secondary seal member 226, however, since the secondary seal member 226 cannot move upwardly because the upper portion of the sealing cartridge or casing 202 is effectively closed by means of the containment washer 206 and the retaining ring 208, and because the viscous silicone grease or fluid comprises an incompressible fluid, pressure forces 228,230 are respectively exerted by the viscous silicone grease or similar fluid upon the valve stem 110 and the underlying surface portion of the secondary seal member 226. Therefore, a static pressure condition exists within the sealing cartridge or casing 202 whereby the internal pressure forces 228,230, characteristic of the incompressible viscous silicone grease or similar fluid, are equal to the external pressure forces 224 characteristic of the hot melt adhesive or other thermoplastic material.

It can therefore be further appreciated or realized that with the sealing assembly 200 of the present invention, the pressure differential, normally existing across the first or primary seal member 216, no longer exists whereby the tendency or propensity for leakage of the hot melt adhesive or other thermoplastic material has effectively been eliminated. It is to be noted that during cyclic operations, that is, when the valve member 112 is moved between its **SEATED** or **CLOSED** position, and its **UNSEATED** or **OPENED** position, the pressure forces characteristic of the hot melt adhesive or other thermoplastic material varies. The reciprocating first or primary seal member 216 dynamically compensates for such changes in the pressure forces. It is to be noted that canted spring members 232,234 are respectively disposed internally within the primary and secondary seal members 216,226 so as to help maintain the structural integrity and configurations of the primary and secondary seal members 216,226 in order to permit the same to perform their sealing functions with respect to, for example, the valve stem 110 and the sealing cartridge or casing 202. In addition, the primary and secondary seal members 216,226 may be fabricated from a suitable material, such as, for example, polyether-ether-ketone (PEEK) or a similar material.

It is also to be noted that the use or employment of the viscous silicone grease or similar fluid, internally within the sealing cartridge or casing, is important for additional reasons. Firstly, for example, the viscous silicone grease or similar fluid is a lubricant. Accordingly, due to laminar flow characteristics, small amounts of the silicone grease or similar fluid may cling or adhere to the valve stem 110 or to the primary or secondary seal members 216,226 as extremely thin film layers. Therefore, friction developed between the valve stem 110 and the primary or secondary seal members 216,226, as the valve stem 110 undergoes its cyclic reciprocating movements, will be substantially reduced. Secondly, as a result of the lubricity of the viscous silicone grease or similar fluid, the tendency of the hot melt adhesive or other thermoplastic materials to in fact cling or adhere to the valve stem is markedly reduced. Thirdly, due to similar laminar flow characteristics of the hot melt adhesive or other thermoplastic materials, and despite the aforenoted lubricity characteristics of the silicone grease or similar fluid, small amounts of the hot melt adhesive or other thermoplastic materials may nevertheless possibly cling or adhere to the valve stem 110 as extremely thin film layers, and effectively bypass, for example, the first or primary seal member 216. However, if such in fact occurs, and if the hot melt adhesive or other thermoplastic materials becomes dislodged from the valve stem 110, the hot melt adhesive or other thermoplastic materials will effectively be encapsulated within the viscous silicone grease or similar fluid. Fourthly, as a result of the aforenoted encapsulation of the hot melt adhesive or other thermoplastic materials within the viscous silicone grease or similar fluid, the hot melt adhesive or other thermoplastic material will not in fact be exposed to the ambient air or oxygen such that the hot melt adhesive or other thermoplastic material cannot harden and become an abrasive mass conventionally acting upon the seal members.

It is lastly noted that as a result of new and improved sealing assembly 200 of the present invention, the sealing point or barrier has effectively been moved from the primary seal member 216 located at the lower end portion of the sealing assembly 200 to the secondary seal member 226 located at the upper end portion of the sealing assembly 200. This is because at the primary seal member 216, the pressure forces 224,228 across the sealing member, sealing point, or barrier 216 have effectively been equalized such that a pressure differential no longer exists, as has been explained hereinbefore, however, at the secondary seal member 226, a pressure differential does exist because the internal pressure forces 230 are relatively larger than the external pressure forces which are atmospheric pressure forces. This is important in that the secondary seal member 226 is effectively protected from any deleterious effects normally caused by the hot melt adhesive or other thermoplastic materials.

Obviously, many variations and modifications of the present invention are possible in light of the above teachings. It is therefore to be understood that within the scope of the appended claims, the present invention may be practiced otherwise than as specifically described herein.

## Claims

1. A hydraulic seal assembly (200) for use within a hot melt adhesive or other thermoplastic material dispensing valve assembly (100), comprising:
a cartridge casing (202) adapted to be annularly disposed around a valve stem (110) of a hot melt adhesive or other thermoplastic material dispensing valve assembly (100) so as to define an annular space (214) with the valve stem (110) of said valve assembly (100);
a first primary seal (216) located at a first end of said cartridge casing (202) and annularly disposed around the valve stem (110) of said valve assembly (100) so as to seal said annular space (214) at a first end of said cartridge casing (202);
a secondary seal (226) located at a second end of said cartridge casing (202) and annularly disposed around the valve stem (110) of said valve assembly (100) so as to seal said annular space (214) at a second end of said cartridge casing (202); and
a viscous, incompressible fluid disposed within said annular space (214) for effectively distributing external pressure forces, exerted upon said first primary seal (216) by the hot melt adhesive or other thermoplastic material of said valve assembly (100), throughout said viscous, incompressible fluid, disposed within said annular space (214) such that the pressure forces internal within said viscous, incompressible fluid are effectively the same as the external pressure forces exerted upon said first primary seal (216) by the hot melt adhesive or other thermoplastic material of said valve assembly (100) whereby a pressure differential across said first primary seal (216) is effectively eliminated so as to prevent leakage of the hot melt adhesive or other thermoplastic material into said cartridge casing (202),
**characterized in that**
said viscous, incompressible fluid comprises a silicone grease.

2. The hydraulic seal assembly as set forth in Claim 1, wherein:
said first primary seal (216) is reciprocally movable within said cartridge casing (202).

3. The hydraulic seal assembly as set forth in Claim 2, wherein:
said first primary seal (216) has a pair of washers (218, 220) and a pre-loading spring (222) operatively associated therewith.

4. The hydraulic seal assembly as set forth in Claim 1, wherein:
canted spring members (232, 234) are disposed internally within said first primary and secondary seals (216, 226).

5. The hydraulic seal assembly as set forth in Claim 1, wherein:
said second end of said cartridge casing (202) has a containment ring (206) operatively associated therewith so as to contain said secondary seal (226) within said cartridge casing (202).

6. The hydraulic seal assembly as set forth in Claim 5, wherein:
said second end of said cartridge casing (202) has a retaining ring (208) operatively associated therewith for retaining said cartridge casing (202) within the hot melt adhesive or other thermoplastic material dispensing valve assembly (100).

7. The hydraulic seal assembly as set forth in Claim 1, wherein:
said first primary and secondary seals (216, 226) are fabricated from a polyether-ether-ketone (PEEK) material.

8. The hydraulic seal assembly as set forth in Claim 1, wherein:
said silicone grease comprises a lubricant which may cling or adhere to the valve stem (110) of the hot melt adhesive or other thermoplastic material dispensing valve assembly (100) so as to lubricate said first primary and secondary seals (216, 226), thereby reducing friction and abrasion of said first primary and secondary seals, and substantially increasing the operative cyclic service life of said first primary and second-ary seals.

9. The hydraulic seal assembly as set forth in Claim 1, wherein:
said silicone grease comprises a lubricant which may prevent the hot melt adhesive or other thermoplastic material from clinging or adhering to the valve stem (110) of the hot melt adhesive or other thermoplastic material dispensing valve assembly (100) so as not to abrade said first primary and secondary seals (216, 226), thereby substantially increasing the operative cyclic service life of said first primary and secondary seals.

10. A hot melt adhesive or other thermoplastic material dispensing valve assembly (100), comprising:
a hot melt adhesive or other thermoplastic material inlet supply port (124) for supply hot melt adhesive or other thermoplastic material into said hot melt adhesive or other thermoplastic material dispensing valve assembly (100);
a hot melt adhesive or other thermoplastic material dispensing port (118) for dispensing hot melt adhesive or other thermoplastic material out from said hot melt adhesive or other thermoplastic material dispensing valve assembly (100);
a valve stem (110);
a valve seat (114);
a valve member (112) fixedly disposed upon said valve stem (110) and
adapted to operatively cooperate with said valve seat (114) such that when said valve member (112) is disposed at an **UNSEATED** or **OPENED** position, hot melt adhesive or other thermoplastic material can be dispensed, while when said valve member (112) is disposed at a **SEATED** or
**CLOSED** position, hot melt adhesive or other thermoplastic material cannot be dispensed;
a hydraulic seal assembly (200) according to anyone of claims 1 to 9.

## Patentansprüche

1. Hydraulische Dichtungsanordnung (200) zur Verwendung mit einer Ventilanordnung (100) zur Ausgabe eines Schmelzklebstoffs oder eines anderen thermoplastischen Materials, umfassend:
ein Patronengehäuse (202), das dazu geeignet ist, ringförmig um einen Ventilschaft (110) einer Ventilanordnung (100) zur Ausgabe des Schmelzklebstoffs oder des anderen thermoplastischen Materials angeordnet zu werden, um mit dem Ventilschaft (110) der Ventilanordnung (100) einen ringförmigen Raum (214) zu bilden;
eine erste primäre Dichtung (216), die sich an einem ersten Ende des Patronengehäuses (202) befindet und ringförmig um den Ventilschaft (110) der Ventilanordnung (100) angeordnet ist, um den ringförmigen Raum (214) an einem ersten Ende des Patronengehäuses (202) abzudichten;
eine sekundäre Dichtung (226), die sich an einem zweiten Ende des Patronengehäuses (202) befindet und ringförmig um den Ventilschaft (110) der Ventilanordnung (100) angeordnet ist, um den ringförmigen Raum (214) an einem zweiten Ende des Patronengehäuses (202) abzudichten; und
ein viskoses, inkompressibles Fluid, das in dem ringförmigen Raum (214) angeordnet ist, um externe Druckkräfte, die durch den Schmelzklebstoff oder das andere thermoplastische Material der Ventilanordnung (100) auf die erste primäre Dichtung (216) ausgeübt werden, derart wirksam über das viskose, inkompressible Fluid, das in dem ringförmigen Raum (214) angeordnet ist, hinweg zu verteilen, dass die Druckkräfte innerhalb des viskosen, inkompressiblen Fluids effektiv die gleichen sind, wie die externen Druckkräfte, die durch den Schmelzklebstoff oder das andere thermoplastische Material der Ventilanordnung (100) auf die erste primäre Dichtung (216) ausgeübt werden, wodurch ein Druckunterschied über die erste primäre Dichtung (216) wirksam beseitigt wird, damit ein Austritt des Schmelzklebstoffs oder des anderen thermoplastischen Materials in das Patronengehäuse (202) verhindert wird,
**dadurch gekennzeichnet, dass**
das viskose, inkompressible Fluid ein Silikonfett umfasst.

2. Hydraulische Dichtungsanordnung nach Anspruch 1, wobei
die erste primäre Dichtung (216) in dem Patronengehäuse (202) hin und her laufend beweglich ist.

3. Hydraulische Dichtungsanordnung nach Anspruch 2, wobei
ein Paar von Unterlegscheiben (218, 220) und eine Vorspannfeder (222) die primäre Dichtung (216) aufweist, die betrieblich mit der ersten primären Dichtung (216) verbunden sind.

4. Hydraulische Dichtungsanordnung nach Anspruch 1, wobei
schräge Federelemente (232, 234) innerhalb der ersten primären und der sekundären Dichtung (216, 226) angeordnet sind.

5. Hydraulische Dichtungsanordnung nach Anspruch 1, wobei
das zweite Ende des Patronengehäuses (202) einen Einschließungsring (206) aufweist, der damit betrieblich verbunden ist, um die sekundäre Dichtung (226) in dem Patronengehäuse (202) einzuschließen.

6. Hydraulische Dichtungsanordnung nach Anspruch 5, wobei
das zweite Ende des Patronengehäuses (202) einen Haltering (208) aufweist, der damit betrieblich verbunden ist, um das Patronengehäuse (202) in der Ventilanordnung (100) zur Ausgabe des Schmelzklebstoffs oder des anderen thermoplastischen Materials zu halten.

7. Hydraulische Dichtungsanordnung nach Anspruch 1, wobei
die erste primäre und die sekundäre Dichtung (216, 226) aus einem Polyether-Ether-Keton-Material (PEEK) hergestellt sind.

8. Hydraulische Dichtungsanordnung nach Anspruch 1, wobei
das Silikonfett ein Schmiermittel umfasst, das an dem Ventilschaft (110) der Ventilanordnung (100) zur Ausgabe des Schmelzklebstoffs oder des anderen thermoplastischen Materials haften oder anhaften kann, um die erste primäre und die sekundäre Dichtung (216, 226) zu schmieren, wodurch die Reibung und der Abrieb der ersten primären und der sekundären. Dichtung verringert werden und die betriebliche zyklische Lebensdauer der ersten primären und der sekundären Dichtung wesentlich erhöht wird.

9. Hydraulische Dichtungsanordnung nach Anspruch 1, wobei
das Silikonfett ein Schmiermittel umfasst, das verhindern kann, dass der Schmelzklebstoff oder das andere thermoplastische Material an dem Ventilschaft (110) der Ventilanordnung (100) zur Ausgabe des Schmelzklebstoffs oder des anderen thermoplastischen Materials haftet oder anhaftet, so dass die erste primäre und die sekundäre Dichtung (216, 226) nicht abgerieben werden, wodurch die betriebliche zyklische Lebensdauer der ersten primären und der sekundären Dichtung wesentlich erhöht wird.

10. Ventilanordnung (100) zur Ausgabe eines Schmelzklebstoffs oder eines anderen thermoplastischen Materials, umfassend
eine Einlasszufuhröffnung (124) für den Schmelzklebstoff oder das andere thermoplastische Material, um den Schmelzklebstoff oder das andere thermoplastische Material in die Ventilanordnung (100) zur Ausgabe des Schmelzklebstoffs oder des anderen thermoplastischen Materials zu führen;
eine Abgabeöffnung (118) für den Schmelzklebstoff oder das andere thermoplastische Material, um den Schmelzklebstoff oder das andere thermoplastische Material aus der Ventilanordnung (100) zur Ausgabe des Schmelzklebstoffs oder des anderen thermoplastischen Materials auszugeben;
einen Ventilschaft (110);
einen Ventilsitz (114);
ein Ventilelement (112), das fest an dem Ventilschaft (110) angeordnet ist und dazu geeignet ist, so betrieblich mit dem Ventilsitz (114) zusammenzuwirken, dass der Schmelzklebstoff oder das andere thermoplastische Material ausgegeben werden kann, wenn das Ventilelement (112) in einer GELÖSTEN oder OFFENEN Stellung angeordnet ist, während der Schmelzklebstoff oder das andere thermoplastische Material nicht ausgegeben werden kann, wenn das Ventilelement (112) in einer GESETZTEN oder GESCHLOSSENEN Stellung angeordnet ist;
eine hydraulische Dichtungsanordnung (200) nach einem der Ansprüche 1 bis 9.

## Revendications

1. Ensemble de joint hydraulique (200) à utiliser à l'intérieur d'un ensemble de soupape de distribution d'adhésif thermofusible ou autre matériau thermoplastique (100), comprenant:
une enceinte de cartouche (202) qui est adaptée pour être disposée de façon annulaire autour d'une tige de soupape (110) d'un ensemble de soupape de distribution d'adhésif thermofusible ou autre matériau thermoplastique (100) de manière à définir un espace annulaire (214) avec la tige de soupape (110) dudit ensemble de soupape (100);
un premier joint primaire (216) qui est situé à une première extrémité de ladite enceinte de cartouche (202) et qui est disposé de façon annulaire autour de la tige de soupape (110) dudit ensemble de soupape (100) de manière à isoler ledit espace annulaire (214) à une première extrémité de ladite enceinte de cartouche (202);
un joint secondaire (226) qui est situé à une deuxième extrémité de ladite enceinte de cartouche (202) et qui est disposé de façon annulaire autour de la tige de soupape (110) dudit ensemble de soupape (100) de manière à isoler ledit espace annulaire (214) à une deuxième extrémité de ladite enceinte de cartouche (202); et
un fluide incompressible visqueux qui est disposé à l'intérieur dudit espace annulaire (214) afin de distribuer efficacement des forces de pression externes, exercées sur ledit premier joint primaire (216) par l'ensemble de soupape de distribution d'adhésif thermofusible ou autre matériau thermoplastique (100), sur la totalité dudit fluide incompressible visqueux, disposé à l'intérieur dudit espace annulaire (214) de telle sorte que les forces de pression internes à l'intérieur dudit fluide incompressible visqueux soient effectivement les mêmes que les forces de pression externes exercées sur ledit premier joint primaire (216) par l'ensemble de soupape de distribution d'adhésif thermofusible ou autre matériau thermoplastique (100), moyennant quoi un différentiel de pression à travers ledit premier joint primaire (216) est efficacement supprimé de manière à empêcher toute fuite de l'adhésif thermofusible ou autre matériau thermoplastique dans ladite enceinte de cartouche (202),
**caractérisé en ce que** ledit fluide incompressible visqueux comprend une grasse au silicone.

2. Ensemble de soupape hydraulique selon la revendication 1, dans lequel ledit premier joint primaire (216) peut se déplacer en exécutant mouvement réciproque à l'intérieur de ladite enceinte de cartouche (202).

3. Ensemble de soupape hydraulique selon la revendication 2, dans lequel ledit premier joint primaire (216) comprend une paire de rondelles (218, 220) et un ressort de préchargement (222) qui est associé de façon opérationnelle à celles-ci.

4. Ensemble de soupape hydraulique selon la revendication 1, dans lequel des éléments de ressort inclinés (232, 234) sont disposés intérieurement à l'intérieur desdits premiers joints primaires et secondaires (216, 226).

5. Ensemble de soupape hydraulique selon la revendication 1, dans lequel ladite deuxième extrémité de ladite enceinte de cartouche (202) comprend un anneau de confinement (206) qui est associé de façon opérationnelle à celle-ci de manière à contenir ledit joint secondaire (226) à l'intérieur de ladite enceinte de cartouche (202).

6. Ensemble de soupape hydraulique selon la revendication 5, dans lequel ladite deuxième extrémité de ladite enceinte de cartouche (202) comprend un anneau de retenue (208) qui est associé de façon opérationnelle à celle-ci afin de retenir ladite enceinte de cartouche (202) à l'intérieur de l'ensemble de soupape de distribution d'adhésif thermofusible ou autre matériau thermoplastique (100).

7. Ensemble de soupape hydraulique selon la revendication 1, dans lequel lesdits premiers joints primaires et secondaires (216, 226) sont fabriqués à partir d'une matière de polyéther-éther-cétone (PEEK).

8. Ensemble de soupape hydraulique selon la revendication 1, dans lequel ladite graisse au silicone contient un lubrifiant qui peut se coller ou adhérer à la tige de soupape (110) de l'ensemble de soupape de distribution d'adhésif thermofusible ou autre matériau thermoplastique (100) de manière à lubrifier lesdits premiers joints primaires et secondaires (216, 226), réduisant de ce fait le frottement et l'abrasion desdits premiers joints primaires et secondaires, et augmentant sensiblement la durée de service cyclique opérationnelle desdits premiers joints primaires et secondaires.

9. Ensemble de soupape hydraulique selon la revendication 1, dans lequel ladite graisse au silicone contient un lubrifiant qui est capable d'empêcher l'adhésif thermofusible ou autre matériau thermoplastique de se coller ou d'adhérer à la tige de soupape (110) de l'ensemble de soupape de distribution d'adhésif thermofusible ou autre matériau thermoplastique (100) de manière à ne pas abraser lesdits premiers joints primaires et secondaires (216, 226), augmentant de ce fait sensiblement la durée de service cyclique opérationnelle desdits premiers joints primaires et secondaires.

10. Ensemble de soupape de distribution d'adhésif thermofusible ou autre matériau thermoplastique (100), comprenant:
un port d'alimentation d'entrée d'adhésif thermofusible ou autre matériau thermoplastique (124) pour fournir un adhésif thermofusible ou autre matériau thermoplastique dans ledit ensemble de soupape de distribution d'adhésif thermofusible ou autre matériau thermoplastique (100);
un port de distribution d'adhésif thermofusible ou autre matériau thermoplastique (118) pour distribuer un adhésif thermofusible ou autre matériau thermoplastique à partir dudit ensemble de soupape de distribution d'adhésif thermofusible ou autre matériau thermoplastique (100);
une tige de soupape (110);
un siège de soupape (114);
un élément de soupape (112) qui est disposé fixement sur ladite tige de soupape (110) et qui est adapté pour coopérer de façon opérationnelle avec ledit siège de soupape (114) de telle sorte que lorsque ledit élément de soupape (112) est disposé dans une position NON ASSISE ou OUVERTE, un adhésif thermofusible ou autre matériau thermoplastique puisse être distribué, alors que lorsque ledit élément de soupape (112) est disposé dans une position ASSISE ou FERMÉE, l'adhésif thermofusible ou autre matériau thermoplastique ne puisse pas être distribué; et
un ensemble de joint hydraulique (200) selon l'une quelconque des revendications 1 à 9.
